(19) Europäisches Patentamt

European Patent Office

Office européen des brevets

(11) Veröffentlichungsnummer : **0 396 952 B1**

(12) **EUROPÄISCHE PATENTSCHRIFT**

(45) Veröffentlichungstag der Patentschrift :
**02.01.92 Patentblatt 92/01**

(51) Int. Cl.⁵ : **F16L 17/04**, F16L 21/06,
F16L 23/04

(21) Anmeldenummer : **90107657.0**

(22) Anmeldetag : **23.04.90**

(54) **Rohrverbindung zwischen zwei stumpf miteinander zu verbindenden Rohrenden.**

(30) Priorität : **12.05.89 DE 3915499
10.06.89 DE 8907124 U**

(43) Veröffentlichungstag der Anmeldung :
**14.11.90 Patentblatt 90/46**

(45) Bekanntmachung des Hinweises auf die
Patenterteilung :
**02.01.92 Patentblatt 92/01**

(84) Benannte Vertragsstaaten :
**AT BE CH DE DK ES FR GB GR IT LI LU NL SE**

(56) Entgegenhaltungen :
**EP-A- 0 066 825
DE-A- 3 602 780
FR-A- 2 155 500
US-A- 4 627 645**

(73) Patentinhaber : **ALLIGATOR VENTILFABRIK
GMBH
Postfach 1120
W-7928 Giengen/Brenz (DE)**

(72) Erfinder : **Bänziger, Fritz
Fischergasse 1
W-7900 Ulm/Donau (DE)**

(74) Vertreter : **Hiebsch, Gerhard F., Dipl.-Ing. et al
Hiebsch & Peege Patentanwälte Postfach 464
Erzbergerstrasse 5a
W-7700 Singen 1 (DE)**

EP 0 396 952 B1

Jouve, 18, rue Saint-Denis, 75001 PARIS

**Beschreibung**

Die Erfindung betrifft eine Rohrverbindung zwischen zwei stumpf miteinander zu verbindenden Rohrenden mit jeweils einem angefügten, lose auf das Rohrende aufgeschobenen Verbindungsteil sowie zwischen diesen Verbindungsteilen angeordnetem Dichtring, der in seiner Ringausnehmung eine einen Innenring erhaltende Ringnut aufweist und von den gegeneinander verspannten Verbindungsteilen gehalten wird.

Eine derartige Rohrverbindung is durch die DE-A-3206570 bekannt geworden, bei der die Verbindungselemente aus Flanschringen bestehen, die in einem Innenraum ein ringförmiges Dichtelement aufnehmen. In letzteres ist eine Innennut eingeformt, die einen Ring aus hartem und/oder plastischem Werkstoff, beispielsweise Metall, enhält. Dieser Innenring umfängt den zwischen den Rohrenden bestehenden Spalt. Die flanschartigen Verbindungselemente werden nach DE-A-3206570 durch Tellerfedern und zusätzliche Außenflansche gehalten.

In Kenntnis dieses Standes der Technik hat sich der Erfinder das Ziel gesetzt, eine verbesserte Rohrverbindung anzubieten.

Die Lösung dieser Aufgabe besteht darin, daß die Ringnut vom Nutboden einer hinterschnittenen Innennut ausgeht, die der Innenring radial durchsetzt, wobei der Hinterschneidungsraum dieser Innennut eine als begrenzt elastische Dichtlippe ausgebildete Wandung aufweist. Dazu hat es sich als günstig erwiesen, die Ringausnehumg zur Radialachse des Dichtringes hin durch die geneigt gestellte Dichtlippe verjüngt zu gestalten.

Jeder der Hinterschneidungsräume der Innennut kann einen Kraftspeicher, insbesondere eine Spiral- oder Schraubenfeder aufnehmen, der/die etwa radial auf die Dichtlippe drückt und damit deren Dichtwirkung verbessert.

Der Innenring ist erfindungsgemäß entlang eines Durchmessers geteilt, und jeder Teil weist einen radial nach innen ragenden Mittelsteg auf, der entweder zur besseren Handhabung zum Ende seines Ringteiles hin angefast ist oder aber eine zur Ringmitte hin zunehmende Querschnittshöhe besitzt. Im letztgenannten Fall ist die Innenkontur des Mittelsteges durch Radien um jeweils einen Punkt bestimmt, der in Abstand zum Ringmittelpunkt auf dem den Innenring teilenden Durchmesser liegt.

Auch hat es sich als günstig erwiesen, daß der Mittelsteg in der Symmetrieebene des Dichtringes liegt und eine Radialebene bestimmt, in welcher die Rohrenden einander benachbart sind.

Im Rahmen der Erfindung liegt auch ein Hilfskörper, der in das freie Rohrende mittels einers abgestuften Innenabsatzes eingeschoben wird und sich zu seiner freien Stirnfläche hin konisch verjüngt — der Stirndurchmesser ist kürzer als der innere Lippendurchmesser.

Wesentlich ist also die Ausbildung zweier Dichtlippen am Dichtring, die zur Vergrößerung der Dichtkraft durch die beschriebene ringförmige Spiralfeder angedrückt werden können. Diese Form gewährleistet eine steigende Dichtwirkung mit steigendem Innendruck und ist toleranzunabhängig. Da die Dichtlippen dem Rohrumfang beidseits der Rohrenden bzw. des Rohrstoßes dicht anliegen, trägt das in den Rohren strömende Medium schon bei partiellem Austritt in den sog. Hinterschneidungsraum durch Druck auf die Dichtlippen zur — zunehmenden — Abdichtung bei. Ein Unterwandern und Anheben der Dichtung durch Strömungsmedium bleibt ausgeschlossen.

Es wird durch die Erfindung innerhalb der Dichtung ein Innenraum geschaffen, so daß das Dichtelement Toleranzen in dem aufnehmenden, teilschalenartigen Verbindungselement sowie in Rohr ausgleichen kann. Eine übermäßige Durckbeanspruchung des Dichtelementes wird in jedem Falle vermieden und die Schalenkraft wird nur direkt auf die Rohrenden übertragen.

Von besonderer Bedeutung ist die Trennung des Innen- oder Stützringes mit seinem Mittelsteg in zwei Teile, zudem die etwa halbmondförmige Ausgestaltung dieses Innensteges jedes der Stützringteile.

Mit Hilfe des Konusses des beschriebenen Hilfskörpers, der auf das Rohrende aufgesetzt wird, kann der Dichtring bzw. das Dichtelement mit dem Stützring ganz auf das Rohrende aufgeschoben werden, ohne daß dieser Elastomerkörper über das Rohrende hinausragen würde. Dabei wird der geteilte Stützring durch den Konus auf den Rohraußendurchmesser gespreizt.

Mittels dieser beschriebenen Maßnahme ist es möglich, ein Rohrstück zwischen zwei glatten, feststehenden Rohrenden einzusetzen und mit zwei Kupplungen zu verbinden. Hierzu werden die beiden Kupplungen soweit über die beiden Spalten geschoben, bis die geteilten Stützringe mit ihrem Stegteil angedrückt und durch das Dichtelement in die Spalte einrasten. Erst dann lassen sich die beiden Schalenhälften bzw. Verbindungselemente vorschriftsmäßig montieren.

Zur Demontage lassen sich die beiden Stützringteile je einer Kupplung mittels zweier Schraubenzieher spreizen und die Kupplungen soweit zur Seite schieben, daß das Rohrstück wieder unproblematisch herausgenommen zu werden vermag.

Weitere Vorteile, Merkmale und Einzelheiten der Erfindung ergeben sich aus der nachfolgenden Beschreibung eines bevorzugten Ausführungsbeispieles sowie anhand der Zeichnung ; diese zeigt in

Fig. 1 :      eine teilweise geschnittene Seitenansicht von Rohrenden mit diese verbindendem Dichtring ;

Fig. 2 :      ein Detail aus Fig. 1 in Draufsicht ;

Fig. 3 :      die Seitenansicht eines anderen Details der Fig. 1.

Fig. 4 :      Rohrenden mit zugeordneter Kupplung in Seitenansicht.

Die freien Enden 10, $10_z$ zweier auf einer Achse A einander koaxial zugeordneter Rohre 12, $12_z$ sollen durch einen Dichtring 14 aus begrenzt elastischem Werkstoff miteinander verbunden werden.

Der Außendurchmesser d der Rohrenden 10, $10_z$ ist geringer als der Durchmesser e der Ringausnehmung 16 an deren Außenkontur $16_a$, von der aus sich die Ringausnehmung 16 bis zu einer Innenkontur $16_i$ an einer hinterschnittenen Innennut 18 zu einem Innendurchmesser i him verjüngt. Die Wandung dieser Ringausnehmung 16 wird von der zur Radialachse R des Dichtringes 14 geneigten Oberfläche 22 einer durch die Hinterschneidungsräume 19 der Innennut 18 entstehenden Dichtlippe 23 gebildet.

Diese kann durch eine in den Hinterschneidungsraum 19 eingesetzte und aus Gründen der Übersichtlichkeit in der Zeichnung bei 25 nur angedeutete ringförmige Schrauben- oder Spiralfeder zur Längsachse A hin unter Spannung gesetzt werben.

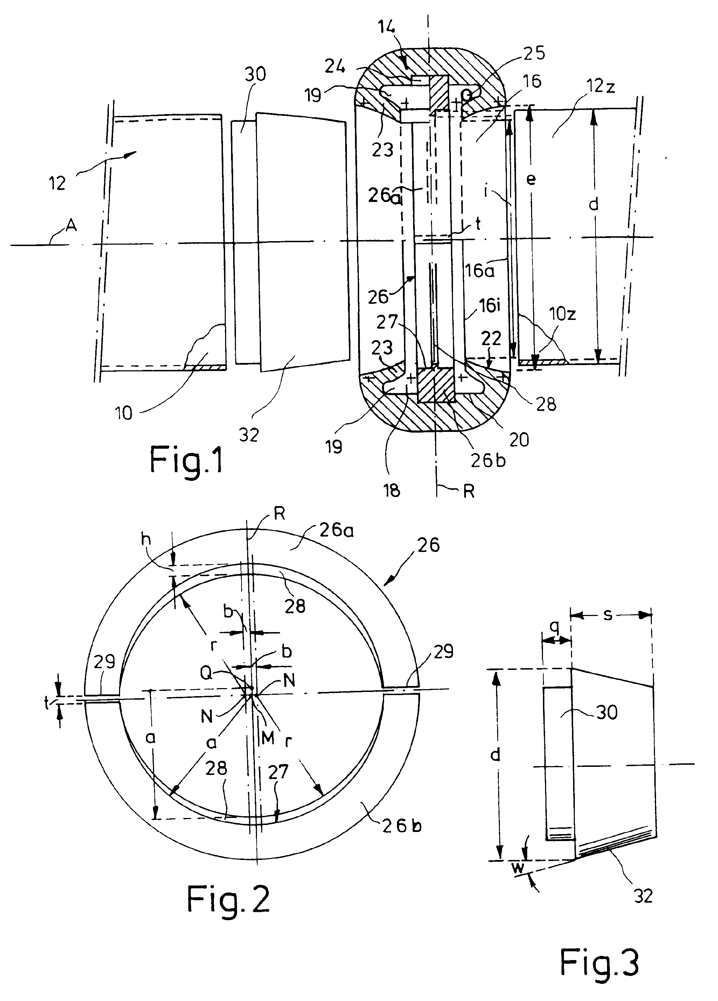

Vom Nutenboden 20 der hinterschnittenen Innennut 18 geht eine Ringnut 24 rechteckigen Querschnittes aus, in welche ein Stützring 26 etwa quadratischen Querschnittes eingesetzt ist. Dieser Stützring 26 ist — wie insbesondere Fig. 2 zeig — aus gleichgeformten Halbringeilen $26_a$ und $26_b$ unter Bildung einer Spaltweite t von etwa 2 mm zusammengesetzt, wobei in jedem Halbringteil $26_a$, $26_b$ ein von dessen Innenfläche 27 mittig abragender Mittelsteg 28 vorgesehen ist. Dieser ist nahe den Enden 29 des Halbringteiles $26_a$ bzw. $26_b$ angefast, im Falle des in Fig. 2 wiedergegebenen Ausführungsbeispiels aber durch Ausdrehen mit ovaler Kontur querschnittlich zu den Enden 29 hin mit abnehmender Querschnittshöhe ausgebildet.

Die Innenkontur des Mittelsteges 28 kann durch Verschieben des Anfangs des Ringradius a auf der Radialachse R bis zu einem Punkt Q erzeugt werden. Jedoch ist es auch möglich, die Radien r dieser Kontur an Punkten N anzusetzen, die sich in Abstand b (hier 2, 5 mm) vom Ringmittelpunkt M befinden — dies bei einem Ringradius a eines Maßes r + b von etwa 55 mm.

In das Rohrende 10 bzw. $10_z$ wird ein zylindrischer Innenabsatz 30 der Axiallänge q von beispielsweise 10 mm eines Hilfskörpers 32 eingesetzt, der sich seinerseits endwärts über seine Länge s von 35 mm in einem Winkel w von hier 7,5° verjüngt.

Mittels dieses Hilfskörpers 32 kann der Dichtring 14 mit seinem Stützring 26 ganz auf das Rohrende 10 bzw. $10_z$ aufgeschoben werden, ohne daß der Elastomerkörper 14 über das Rohrende 10, $10_z$ hinausragen würde. Dabei wird der geteilte bzw. aus den zwei Halbringteilen $26_a$ und $26_b$ bestehende Stützring 26 durch die Konizität des Hilfskörpers 32 auf den Rohraußendurchmeser d gespreizt.

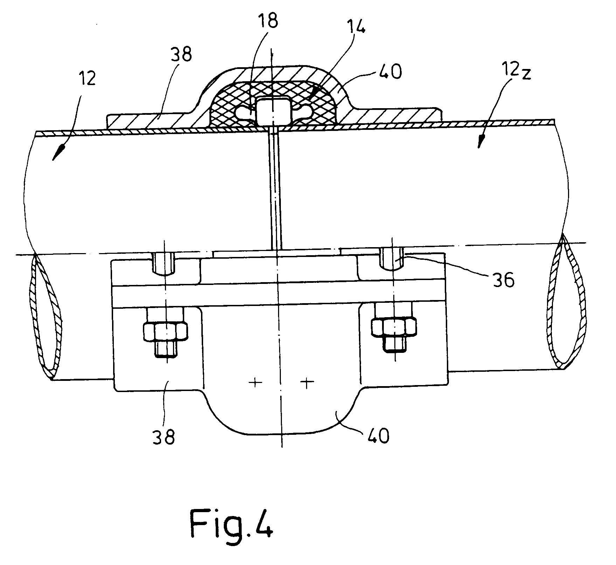

Fig. 4 zeigt eine Kupplung 34 aus zwei durch Schraubbolzen 36 verbundenen Halbschalen 38 ; jede Halbschale 38 ist mit einem rinnenartigen Wulst 40 mit Innenraum zur Aufnahme des Dichtringes 14 ausgestattet.

Die oben erwähnten beiden Kupplungen 34 werden so weit über die beiden Spalten geschoben, bis die geteilten Stützringe 26 mit ihrem Mittelsteg 28 angedrückt werden und durch den Dichtkörper 14 in die Spalte einrasten. Nun lassen sich die beiden Halbschalen 38 vorschriftsmäßig montieren.

## Patentansprüche

1. Rohrverbindung zwischen zwei stumpf miteinander zu verbindenden Rohrenden mit jeweils einem angefügten, lose auf das Rohrende aufgeschobenen Verbindungsteil sowie zwischen diesen Verbindungsteilen angeordnetem Dichtring, der in einer Ringausnehmung eine einen Innenring erhaltende Ringnut aufweist und von den gegeneinander verspannten Verbindungsteilen gehalten wird, dadurch gekennzeichnet, daß die Ringnut (24) vom Nutboden (20) einer hinterschnittenen Innennut (18) ausgeht, die der Innenring (26) radial durchsetzt, und daß der Hinterschneidungsraum (19) dieser Innennut eine als begrenzt elastische Dichtlippe (23) ausgebildeten Wandung aufweist.

2. Rohrverbindung nach Anspruch 1, dadurch gekennzeichnet, daß sich die Ringausnhmung (16) zur Radialachse (R) des Dichtringes (14) hin durch die geneigt gestellte Dichtlippe (23) verjüngt.

3. Rohrverbindung nach Anspruch 1 oder 2, dadurch gekennzeichnet, daß der Hinterschneidungsraum (19) der Innennut (18) einen Kraftspeicher (25) aufnimmt, der etwa radial auf die Dichtlippe (23) drückt.

4. Rohrverbindung nach einem der Ansprüche 1 bis 3, dadurch gekennzeichnet, daß der Innenring (26) entlang eines Durchmessers geteilt ist und jeder Teil ($26_a$ bzw. $26_b$) einen radial nach innen ragenden Mittelsteg (28) aufweist.

5. Rohrverbindung nach Anspruch 3 oder 4, dadurch gekennzeichnet, daß der Mittelsteg (28) zum Ende

(29) seines Ringteils (26$_a$ bzw. 26$_b$) hin angefast ist.

6. Rohrverbindung nach Anspruch 3 oder 4, dadurch gekennzeichnet, daß die Höhe (h) des Mittelsteges (28) von den Enden (29) des Ringteiles (28$_a$ bzw. 28$_b$) zur Ringmitte hin zunimmt und dort den höchsten Querschnitt besitzt.

7. Rohrverbindung nach Anspruch 6, dadurch gekennzeichnet, daß die Innenkontur des Mittelsteges (28) durch Radien (r) um jeweils einen Punkt (N) bestimmt ist, der in Abstand (b) zum Ringmittelpunkt (M) auf dem den Innenring (26) teilenden Durchmesser liegt, oder daß die Innenkontur des Mittelsteges (28) durch Verschieben der Rohrkontur auf der Querschnittsmittelachse (R) um ein Maß (h) bestimmt ist.

8. Rohrverbindung nach einem der Ansprüche 1 bis 7, dadurch gekennzeichnet, daß der Mittelsteg (28) in der Symmetrieebene des Dichtringes (14) liegt.

9. Rohrverbindung nach Anspruch 1, dadurch gekennzeichnet, daß die Verbindungselemente Teilschalen (38) sind, die jeweils mittels eines ausgeformten kammartigen Wulstes (40) einen Abschnitt des Dichtrings (14) aufnehmen.

10. Rohrverbindung nach einem der Ansprüche 1 bis 9, dadurch gekennzeichnet, daß auf das freie Rohrende (10 bzw. 10$_z$) ein sich von diesem ab konisch verjüngender Hilfskörper (32) aufgesetzt ist, dessen Stirndurchmesser kürzer ist als der innere Lippendurchmesser (i), wobei gegebenenfalls der Hilfskörper (32) mit einem von ihm abgestuften Innenabsatz (30) im Rohrende (10, 10$_z$) sitzt.

## Claims

1. Pipe joint between two pipe ends to be connected together by means of a butt joint, comprising connectors loosely fitted on to each pipe end and a sealing ring disposed between these connectors, said sealing ring having in an annular recess an annular groove receiving an inner ring and being held by the mutually tensioned connectors, characterised in that the annular groove (24) start from the groove base (20) of an undercut inner groove (18) which passes radially through the inner ring (26), and that the undercut zone (19) of this inner groove has a wall forming a limitedly elastic sealing lip (23).

2. Pipe joint according to claim 1, characterised in that the annular recess (16) tapers towards the radial axis (R) of the sealing ring (14) through the inclined sealing lip (23).

3. Pipe joint according to claim 1 or claim 2, characterised in that the undercut zone (19) of the inner groove (18) receives an energy storage mechanism (25) which presses substantially radially on the sealing lip (23).

4. Pipe joint according to one of claims 1 to 3, characterised in that the inner ring (26) is divided along a diameter and each part (26$_a$ or 26$_b$) has a radially inwardly projecting centre bar (28).

5. Pipe joint according to claim 3 or claim 4, characterised in that the centre bar (28) is chamfered towards the end (29) of its ring portion (26$_a$ or 26$_b$).

6. Pipe joint according to claim 3 or claim 4, characterised in that the height (h) of the centre bar (28) increases from the ends (29) of the ring portion (28$_a$ or 28$_b$) towards the ring centre, the highest cross section being at that point.

7. Pipe joint according to claim 6, characterised in that the inner contour of the centre bar (28) is defined by radii (r) each about a point (N) situated at a distance from the ring centre (M) on the diameter dividing the inner ring (26) or that the inner contour of the centre bar (28) is defined by displacement of the pipe contour on the cross-sectional centre axis (R) by an amount (h).

8. Pipe joint according to one of claims 1 to 7, characterised in that the centre bar (28) is situated in the plane of symmetry of the sealing ring (14).

9. Pipe joint according to claim 1, characterised in that the connectors are partial shells (38) each receiving a section of the sealing ring (14) by means of a shaped comb-like bulge (40).

10. Pipe joint according to one of claims 1 to 9, characterised in that an auxiliary body (32) is placed on the free pipe end (10 or 10$_z$) tapering conically therefrom, the front diameter of which is shorter than the inner lip diameter (i), the auxiliary body (32) optionally sitting in the pipe end (10, 10$_z$) by means of a stepped inner shoulder (30).

## Revendications

1. Raccord pour tubes entre deux extrémités de tubes à relier bout à bout l'une à l'autre, comportant une partie de raccord rapportée, engagée librement sur chaque extrémité de tube, ainsi qu'un anneau d'étanchéité disposé entre ces parties de raccord, qui présente dans un évidement annulaire une rainure annulaire renfermant une bague intérieure, et qui est maintenu par les parties de raccord serrées l'une contre l'autre, caractérisé en ce que la rainure annulaire (24) part du fond (20) d'une rainure intérieure (18) en contre-dépouille que la bague intérieure (26) traverse radialement, et en ce que l'espace en contre-dépouille (19) de cette rainure intérieure comporte une paroi réalisée sous la forme d'une lèvre d'étanchéité (23) d'élasticité limitée.

2. Raccord pour tubes selon la revendication 1, caractérisé en ce que l'évidement annulaire (16) se rétrécit en direction de l'axe radial (R) de l'anneau d'étanchéité (14), par la disposition inclinée de la lèvre d'étanchéité (23).

3. Raccord pour tubes selon la revendication 1 ou 2, caractérisé en ce que l'espace en contre-dépouille (19) de la rainure intérieure (18) reçoit un accumulateur de force (25) qui fait pression de manière sensiblement radiale sur la lèvre d'étanchéité (23).

4. Raccord pour tubes selon l'une des revendications 1 à 3, caractérisé en ce que la bague intérieure (26) est divisée le long d'un diamètre, et chaque partie ($26_a$ ou $26_b$) présente une nervure centrale (28) en saillie radialement vers l'intérieur.

5. Raccord pour tubes selon la revendication 3 ou 4, caractérisé en ce que la nervure centrale (28) est en biseau en direction de l'extrémité (29) de sa partie de bague ($26_a$ ou $26_b$).

6. Raccord pour tubes selon la revendication 3 ou 4, caractérisé en ce que la hauteur (h) de la nervure centrale (28) augmente à partir des extrémités (29) de la partie de bague ($26_a$ ou $26_b$), en direction du centre de la bague et possède à cet endroit en coupe transversale la hauteur la plus importante.

7. Raccord pour tubes selon la revendication 6, caractérisé en ce que le contour intérieur de la nervure centrale (28) est déterminé par des rayons (r) autour de points respectifs (N) situés sur le diamètre divisant la bague intérieure (26) à une distance (b) du centre (M) de la bague, ou bien en ce que le contour intérieur de la nervure centrale (28) est déterminé par translation du contour du tube sur une valeur (h), le long de l'axe central (R) de la section transversale.

8. Raccord pour tubes selon l'une des revendications 1 à 7, caractérisé en ce que la nervure centrale (28) se situe dans le plan de symétrie de l'anneau d'étanchéité (14).

9. Raccord pour tubes selon la revendication 1, caractérisé en ce que les éléments de raccord sont des parties de coque (38) qui reçoivent chacune, au moyen d'un bourrelet (40) façonné en forme de chambre, un tronçon de l'anneau d'étanchéité (14).

10. Raccord pour tubes selon l'une des revendications 1 à 9, caractérisé en ce que sur l'extrémité libre de tube (10 ou $10_z$) est appliqué un corps auxiliaire (32) qui se rétrécit de manière conique en s'éloignant de l'extrémité de tube et dont le diamètre frontal est plus petit que le diamètre intérieur (i) de la lèvre d'étanchéite, le corps auxiliaire (32) étant le cas échéant calé dans l'extrémité de tube (10, $10_z$) par une partie intérieure (30) en retrait formant épaulement par rapport audit corps.

Fig.1

Fig.2

Fig.3

Fig.4